# EUROPEAN PATENT SPECIFICATION

(11) **EP 3 108 534 B1**
(45) Date of publication and mention of the grant of the patent: **23.10.2019**
(21) Application number: 14882915.3
(22) Date of filing: 18.02.2014
(51) Int. Cl.: H01M 4/1391, H01M 4/131, H01M 4/505, H01M 4/525, H01M 4/62, H01M 10/0525, H01M 4/36

(54) **A GRAPHENE/HE-NCM COMPOSITE FOR LITHIUM ION BATTERY, A METHOD FOR PREPARING SAID COMPOSITE, AND AN ELECTRODE MATERIAL AND A LITHIUM ION BATTERY COMPRISING SAID COMPOSITE**
GRAPHEN/HE-NCM-VERBUNDSTOFF FÜR LITHIUM-IONEN-BATTERIE, VERFAHREN ZUR HERSTELLUNG DES BESAGTEN VERBUNDSTOFFES UND ELEKTRODENMATERIAL SOWIE LITHIUM-IONEN-BATTERIE MIT BESAGTEM VERBUNDSTOFF
COMPOSITE À BASE DE GRAPHÈNE/NICKEL-COBALT-MANGANÈSE HAUTE ÉNERGIE POUR BATTERIE AU LITHIUM-ION, PROCÉDÉ DE PRÉPARATION DUDIT COMPOSITE, ET MATÉRIAU D'ÉLECTRODE ET BATTERIE AU LITHIUM-ION COMPRENANT LEDIT COMPOSITE

(43) Date of publication of application: 28.12.2016
(73) Proprietor: Robert Bosch GmbH, 70442 Stuttgart (DE)
(72) Inventor: XIA, Yongyao, Shanghai 200438 (CN); HOU, Mengyan, Shanghai 200438 (CN); LIU, Jinlong, Shanghai 200438 (CN); CHEN, Long, Shanghai 200438 (CN); GUO, Shaoshuai, Shanghai 200438 (CN); JIANG, Rongrong, Shanghai 200335 (CN); LI, Chuanling, Shanghai 200335 (CN); ZHOU, Longjie, Shanghai 200335 (CN); WANG, Lei, Shanghai 200335 (CN)
(86) International application number: PCT/CN2014/072197
(87) International publication number: WO 2015/123808

(56) References cited:
- WO-A1-2013/066269
- WO-A1-2013/120724
- WO-A2-2013/016339
- US-A1- 2007 111 106
- US-A1- 2010 143 798
- US-A1- 2010 297 502
- US-A1- 2014 023 926
- JAI-RUI HE ET AL.: "SYNTHESIS AND ELECTROCHEMICAL PROPETIES OF GRAPHENE MODIFIED LICO1/3NI1/3MN1/3O2 CATHODES FOR LITHIM ION BATTERIES", RSC ADVANCES, vol. 4, 25 November 2013 (2013-11-25), pages 2568-2572, XP002763251, DOI: 10.1039/c3ra45115a
- XIAODONG XU ET AL:: "RECENT PROGRESS ON NANOSTRUCTURE 4V CATHODE MATERIALS FOR LI-ION BATTERIES FOR MOBILE ELECTRONICS", MATERIALS TODAY, vol. 16, no. 12, 31 December 2013 (2013-12-31), pages 487-495, XP002763436, DOI: 10.1016/j.mattod.2013.11021

## Description

### Technical Field

The present invention relates to a graphene/HE-NCM composite for lithium ion battery; as well as a method for preparing said graphene/HE-NCM composite, an electrode material and a lithium ion battery comprising said graphene/HE-NCM composite.

### Background Art

Because of the high discharge capacity and low cost comparing to conventional cathode materials, Li-rich layered oxide compounds HE-NCM (xLi₂MnO₃•(1-x)LiNi_{y}Co_{z}Mn_{1-y-z}O₂ (0<x<1, 0<y<1, 0<z<1)) are considered to be the most prospective candidate of the next generation cathode materials. However, the electrochemical performances at high current density of this kind of material still need to be improved. What's more, the side reactions of electrode with currently commonly used electrolytes are inevitable because of the high cut off voltage of this kind of material. As previously reported, simple mechanical mixing of electrode materials and graphene (Gra) was effective in improving the rate capability as well as some other electrochemical performances. For example, Jiang etc. synthesized a graphene wrapped HE-NCM cathode material by simply mechanically mixing graphene with HE-NCM cathode material. In the hybrid cathode material, the graphene sheets serve as efficient electronically conductive frameworks benefitting from their 2D structure and outstanding electronic conductivity. The polarization of pristine HE-NCM can be effectively alleviated with the help of graphene, leading to improved high-rate capability and cyclability.

The enhanced electrochemical performance via graphene/HE-NCM composite is from the improved electronic conductivity. Thus obtaining high conductivity is the key to design the structure of the graphene/HE-NCM composite. In principal, a good design has characterizations of uniform distribution of graphene in HE-NCM particles, good contact of HE-NCM particles with graphene sheets and maximum usage of graphene. Besides, the method to achieve the designed structure is also a challenge. Generally, there are several methods to produce graphene/HE-NCM composite material. One is simply mechanically mixing pristine powder and graphene solution. The product by this method cannot be mixed very well because of the lack of interaction of graphene and inorganic particles. The other is reducing graphene oxide (GO)/inorganic composite material using strong reductants (such as hydrazine and sodium borohydride), solvothermal reduction in caustic solvents or special atmosphere under rather high temperature. Transitional metals are prone to be reduced via this method due to the strong reducing medium. What's more, it is difficult for these two methods to prepare graphene/HE-NCM composite materials on a large scale.

### Summary of Invention

It is therefore an object of the present invention to provide a graphene/HE-NCM composite with uniform distribution of graphene in a facile, low-cost method. Said composite is prepared by thermal decomposition of graphene oxide/HE-NCM at low temperature in a short time, wherein neither special atmosphere nor high temperature is employed. All these endow this method suitable for large-scale production of HE-NCM composite material.

This object is achieved by a method for preparing a graphene/HE-NCM composite, wherein more than one HE-NCM particles of the formula (1)

xLi₂MnO₃•(1-x)LiNi_{y}Co_{z}Mn_{1-y-z}O₂ (1),

wherein 0<x<1, 0<y<1, and 0<z<1,
are in electrical contact with each other via one or multiple graphene flakes,
said method including:
a) dispersing HE-NCM particles in a solution of graphene oxide by ultrasonication to give a dispersion;
b) lyophilization of the dispersion to give a graphene oxide/HE-NCM composite;
c) thermal decomposition of the graphene oxide/HE-NCM composite to give the graphene/HE-NCM composite.

Another object of the present invention is to provide a graphene/HE-NCM composite for lithium ion battery with enhanced electrochemical performance due to improved conductivity of composite.

This object is achieved by the graphene/HE-NCM composite prepared by the method according to the present invention.

According to another aspect of the invention, an electrode material is provided, which comprises the graphene/HE-NCM composite according to the present invention.

According to another aspect of the invention, a lithium ion battery is provided, which comprises the graphene/HE-NCM composite according to the present invention.

### Brief Description of Drawings

The above-mentioned and other features and advantages of this invention, and the manner of attaining them, will become more apparent and the invention itself will be better understood by reference to the following description of embodiments of the invention taken in conjunction with the accompanying drawings, wherein:
- Figure 1: shows the schematic sketch of the graphene/HE-NCM composite;
- Figure 2: shows the TEM images of the graphene/HE-NCM composite materials of Example 4;
- Figure 3: shows the diagrams of the infrared spectra of the graphene oxide/HE-NCM composite of Example 4 and the pristine HE-NCM material of Example 2;
- Figure 4: shows the enlarged diagram of the peaks in the range of 1100 ∼ 1130 cm⁻¹ of Figure 3;
- Figure 5: shows the first cycle charge/discharge curves of the graphene/HE-NCM composite of Example 4 and the pristine HE-NCM material of Example 2;
- Figure 6: shows the cycling capabilities of the graphene/HE-NCM composite of Example 4 and the pristine HE-NCM material of Example 2.

### Detailed Description of Preferred Embodiments

The present invention relates to a method for preparing a graphene/HE-NCM composite, wherein more than one HE-NCM particles of the formula (1)

xLi₂MnO₃•(1-x)LiNi_{y}Co_{z}Mn_{1-y-z}O₂ (1),

wherein 0<x<1, 0<y<1, and 0<z<1,
are in electrical contact with each other via one or multiple graphene flakes,
said method including:
a) dispersing HE-NCM particles in a solution of graphene oxide by ultrasonication to give a dispersion;
b) lyophilization of the dispersion to give a graphene oxide/HE-NCM composite;
c) thermal decomposition of the graphene oxide/HE-NCM composite to give the graphene/HE-NCM composite.

In an embodiment of the method according to the present invention, the index x in the formula (1) can be from 0.3 to 0.7; the index y can be from 0.2 to 0.8; and the index z can be from 0.1 to 0.5.

### a) Dispersing HE-NCM in a solution of GO

GO sheets can be prepared by a modified Hummer's method (D.C. Marcano, et al., Improved Synthesis of Graphene Oxide, ACS Nano, 2010, 4, 4806).

The concentration of the solution of GO is not particularly limited, since all the solvent will be removed in step b).

The HE-NCM particles are dispersed by ultrasonication in a solution, preferably an aqueous solution of graphene oxide. The solvent of the GO solution is not particularly limited. Any other solvents within which GO is soluable and which are inert to the reactants and easy to be removed in step b) can also be used.

In an embodiment of the method according to the present invention, based on the HE-NCM particles, 1 - 20 wt.%, preferably 1 - 10 wt.% of graphene oxide is used.

### b) Drying the dispersion

According to the present invention, the dispersion is dried by lyophilization. It is believed by the inventors that lyophilization is favorable for the further exfoliation of graphene oxide. After lyophilization, homogenously mixed GO/HE-NCM composite can be obtained because of the interaction between the HE-NCM particle and the oxygen-containing group, such as -OH, -COOH, -O-, in the GO.

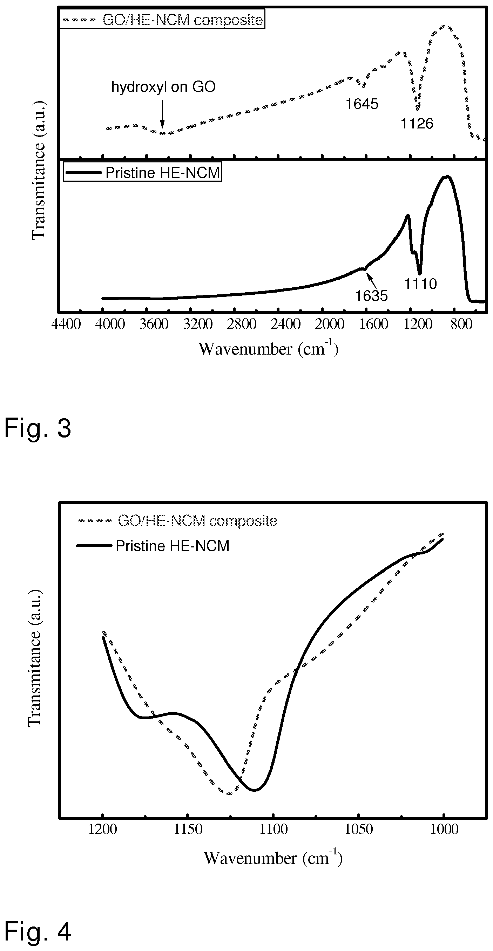

The blueshift of the peaks of the chemical bonds in HE-NCM particles as shown in Figures 3 and 4 clearly demonstrates the considerable interaction between the oxygen-containing group in the GO and the chemical bonds in HE-NCM particles.

### c) Thermal decomposition of the GO/HE-NCM composite

In an embodiment of the method according to the present invention, the temperature in the c) thermal decomposition can be in a range of 300 - 350°C.

In an embodiment of the method according to the present invention, the duration of the c) thermal decomposition can be in a range of 5 min - 3 h, preferably 10 min - 2 h, more preferably 30 min - 1 h.

The atmosphere of the c) thermal decomposition is not particularly limited.

In an embodiment of the method according to the present invention, the c) thermal decomposition can be carried out under an ambient atmosphere.

In an embodiment of the method according to the present invention, the c) thermal decomposition can be carried out under an inert atmosphere, such as N₂ or Ar, or under a reducing atmosphere, such as H₂, or in their combination, such as H₂/Ar.

In an embodiment of the method according to the present invention, HE-NCM particles may be used in any shape of particles, for example, spherical, sheet-like, or irregular particles. Further, the lithium-rich layered oxide particle may be in a form of primary particles or secondary particles. The size of the lithium-rich layered oxide particle can be any commonly used sizes in the art; for primary particles, for example, 50 nm to 800 nm, or 100 nm to 500 nm. HE-NCM particles used in the invention may be prepared by traditional preparation processes, such as the co-precipitation process.

The present invention further relates to the graphene/HE-NCM composite prepared by the method according to the present invention.

In an embodiment of the graphene/HE-NCM composite according to the present invention, more than one HE-NCM particles can be in electrical contact with each other via a common graphene flake.

In an embodiment of the graphene/HE-NCM composite according to the present invention, more than one HE-NCM particles can be in electrical contact with each other via multiple graphene flakes.

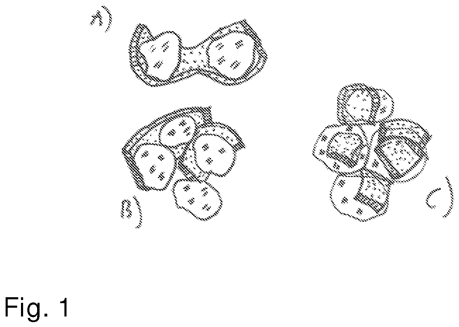

In an embodiment of the graphene/HE-NCM composite according to the present invention, one or more HE-NCM particles can be partially or completely wrapped by one or multiple graphene flakes. In particular, HE-NCM particles can be wrapped by graphene flakes in the following ways:
More than one HE-NCM particles can be partially or completely wrapped together by one or multiple graphene flakes, as shown in Fig. 1A). In this case, more than one HE-NCM particles are in electrical contact with each other via a common graphene flake. In particular, the graphene flake wraps more than one particles of an electrode, i.e. a cathode and it is connecting these at least two particles by wrapping, so the electrical conductivity from one particle to another particle is better via flow of electric current through the graphene layer.

Alternatively or additionally, one or more HE-NCM particles together with one or more HE-NCM particles which are already partially or completely wrapped by one or multiple graphene flakes, are partially or completely wrapped by one or multiple graphene flakes, as shown in Fig. 1B). In this case, more than one HE-NCM particles are in electrical contact with each other via multiple graphene flakes. In particular, the graphene flake can wrap the one or the other single particle alone and also a graphene flake can wrap one or more particles, where as from this one or more particles is already for its own covered by a single graphene flake. So the conductivity of the single coated particle on its outside is already enhanced and also the connection by this single coated particle to another coated or not coated particle is enhanced by the graphene flake which covers both of this type of particles.

Alternatively or additionally, a HE-NCM particle is partially or completely wrapped by one or multiple graphene flakes, as shown in Fig. 1C).

Alternatively or additionally, one or multiple graphene flakes by which one or more HE-NCM particles are partially or completely wrapped, are in electrical contact with the other one or multiple graphene flakes by which the other one or more HE-NCM particles are partially or completely wrapped. In this case, more than one HE-NCM particles are in electrical contact with each other via multiple graphene flakes.

In particular, one or more than one graphene flakes can also cover one particle and the average diameter or length of this graphene flake is in the range of the size of the particle, so that the particle is covered on its outer side by one or more than one graphene flakes. Flakes of this size are covered preferably one particle and the one or by multiple flakes covered particle has an enhanced outer side surface conductivity. If particles of that type covered are touching each other, the electrical conductivity of the arrangement of particles is quite enhanced and the flakes outside on one particle touches the other flake on the outer side of the other particle, giving a commonly joint conductive skin on the outside of the particles and still leaving enough space for electrolyte in between the particles, so that the space for this electrolyte does fill at least 25%, better 35 - 48% of the empty space between the coated particles.

In an embodiment of the graphene/HE-NCM composite according to the present invention, at least one fifth, preferably at least one fourth, more preferably at least one third, particularly preferably at least half of the surface of a HE-NCM particle is wrapped by one or multiple graphene flakes.

In an embodiment of the graphene/HE-NCM composite according to the present invention, the graphene/HE-NCM composite when x=0.5; y=1/3; z=1/3 shows a first discharge capacity of at least 180 mAh/g, preferably at least 190 mAh/g, more preferably at least 200 mAh/g, at 1C.

The present invention further relates to an electrode material, which comprises the graphene/HE-NCM composite according to the present invention.

The present invention further relates to a lithium ion battery, which comprises the graphene/HE-NCM composite according to the present invention.

The following non-limiting examples illustrate various features and characteristics of the present invention, which is not to be construed as limited thereto.

### Example 1: Preparation of graphene oxide (GO)

GO was synthesized by a modified Hummer's method. Firstly, graphite flakes were put into concentrated H₂SO₄ (98%), and then KMnO₄ was gradually added under ice water bath. Subsequently, the ice bath was heated to 35°C and maintained for 30 min. After the addition of 100 mL deionized water, the temperature of the reaction mixture was increased to 98°C. Then the suspension was further treated with H₂O₂ (3%) until there were no gas bubbles. After that, the suspension was washed with HCl solution (3%) and then deionized water. Finally, the graphene oxide was obtained after centrifugation.

### Example 2: Preparation of HE-NCM (Li_{1·2}Mn_{0·54}Ni_{0·13}Co_{0·13}O₂ (xLi₂MnO₃• (1-x)LiNi_{y}Co_{z}Mn_{1-y-z}O₂, x=0.5, y=1/3, z=1/3))

HE-NCM particles were prepared by sintering M(OH)₂ (M=Ni, Co, Mn) and LiOH·H₂O in a molar ratio of Ni(OH)₂ : Co(OH)₂ : Mn(OH)₂ : LiOH·H₂O = 1 : 1 : 4 : 9 at 900°C for 10 hours in a muffle furnace, after M(OH)₂ was prepared by a coprecipitation method with respective transition metal sulphate and sodium hydroxide.

### Example 3: Preparation of graphene/HE-NCM composite (350°C, 60 min, 1.0%)

HE-NCM particles were dispersed in aqueous solution of GO by ultrasonication. The weight ratio between GO and HE-NCM is 1 : 99. Then, a homogenously mixed GO/HE-NCM composite was obtained after lyophilization. And then, a graphene/HE-NCM composite was obtained by thermal decomposition of the GO/HE-NCM composite in air at a temperature of 350°C for 60 min.

### Example 4: Preparation of graphene/HE-NCM composite (350°C, 60 min, 3.5%)

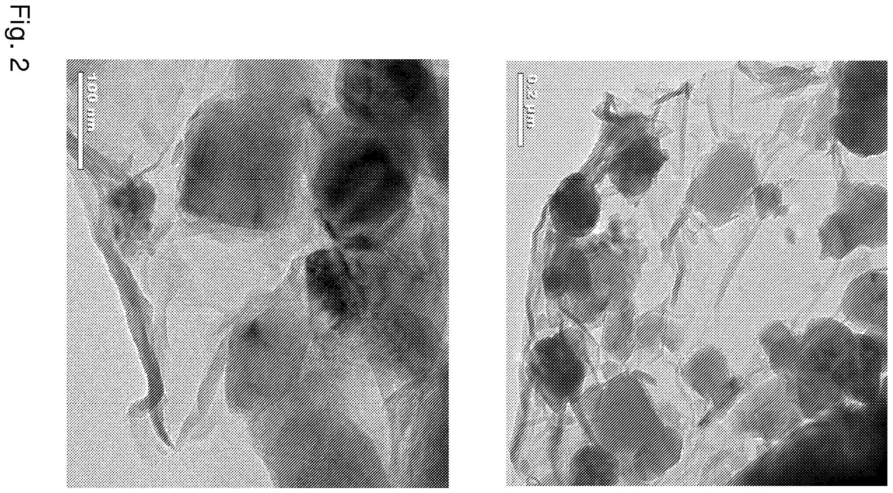

HE-NCM particles were dispersed in aqueous solution of GO by ultrasonication. The weight ratio between GO and HE-NCM is 3.5 : 96.5. Then, a homogenously mixed GO/HE-NCM composite was obtained after lyophilization. And then, a graphene/HE-NCM composite (Fig. 2) was obtained by thermal decomposition of the GO/HE-NCM composite in air at a temperature of 350°C for 60 min.

### Example 5: Preparation of graphene/HE-NCM composite (300°C, 60 min, 3.5%)

HE-NCM particles were dispersed in aqueous solution of GO by ultrasonication. The weight ratio between GO and HE-NCM is 3.5 : 96.5. Then, a homogenously mixed GO/HE-NCM composite was obtained after lyophilization. And then, a graphene/HE-NCM composite was obtained by thermal decomposition of the GO/HE-NCM composite in air at a temperature of 300°C for 60 min.

### Example 6: Preparation of graphene/HE-NCM composite (350°C, 60 min, 10%)

HE-NCM particles were dispersed in aqueous solution of GO by ultrasonication. The weight ratio between GO and HE-NCM is 10 : 90. Then, a homogenously mixed GO/HE-NCM composite was obtained after lyophilization. And then, a graphene/HE-NCM composite was obtained by thermal decomposition of the GO/HE-NCM composite in air at a temperature of 350°C for 60 min.

### Structural and electrochemical evaluation:

Transmission Electron Microscopy (TEM) was employed to characterize the structure of the graphene/HE-NCM composite obtained from Example 4 (Fig. 2).

A mixture of active material (HE-NCM particles with or without graphene wrapped), carbon black and polyvinylidene fluoride (PVDF) in a weight ratio of 80 : 10 : 10 was homogenized in N-methyl-2-pyrrolidone (NMP) as a solvent to form a slurry. The slurry was then uniformly coated on an aluminum foil, dried at 100 °C under vacuum for 10 h, pressed and cut into 12 mm cathode discs. Coin cells (CR2016) were assembled using metallic Li as the counter electrode, Celgard 2400 as the separator, and 1 mol L⁻¹ LiPF₆ as the electrolyte, in an Ar-filled glove box. The cycling performances of the cells were evaluated by using a Land CT2001A battery tester between 2.0V and 4.8V versus Li/Li⁺.

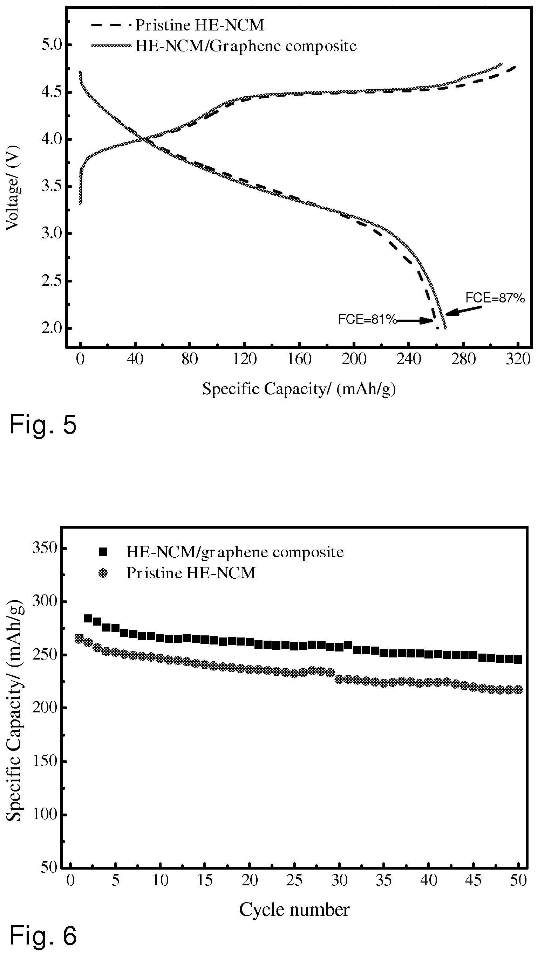

The graphene/HE-NCM composite obtained from Example 4 delivered a discharge capacity of 266 mAh/g at the rate of 0.1C under 30°C comparing to 261mAh/g of the pristine material (HE-NCM particles without graphene wrapped). The first cycle efficiency (FCE) of the graphene/HE-NCM composite was 87%, much higher than 81% of the pristine material (Fig. 5).

In the rate test, the graphene/HE-NCM composite obtained from Example 4 delivered much better capacity retention under large current density. In the rate of 1C, the graphene/HE-NCM composite showed a discharge capacity of 186 mAh/g, while the pristine material showed 170 mAh/g. When increasing the weight ratio of graphene, thermal decomposition temperature or time, the capacity at high current density increases. The average capacity of 5 cycles at each current density for all samples are summarized in Table 1.

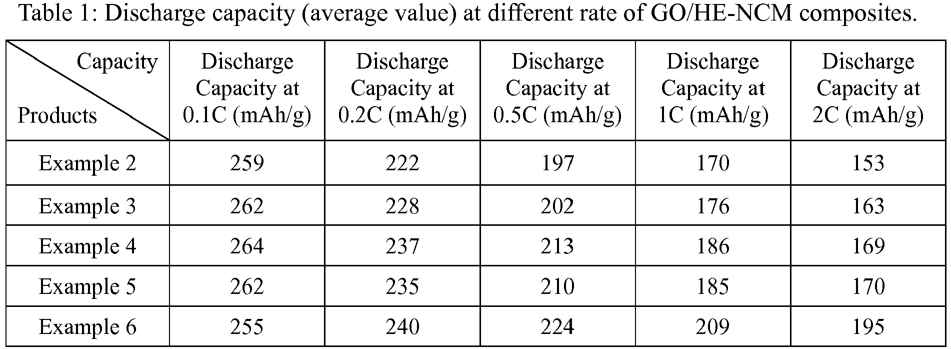

The cyclability was also improved because of the reduction of the polarization due to the suppression of side reactions in the composite material. The capacity retention after 50 cycles at 0.1C for the graphene/HE-NCM composite obtained from Example 4 was 90%, comparing to 82% for the pristine material (Fig. 6).

While certain embodiments have been described, these embodiments have been presented by way of example only, and are not intended to limit the scope of the inventions. The attached claims and their equivalents are intended to cover all the modifications, substitutions and changes as would fall within the scope and spirit of the invention.

## Claims

1. A method for preparing a graphene/HE-NCM composite, wherein more than one HE-NCM particles of the formula (1)
xLi₂MnO₃•(1-x)LiNi_{y}Co_{z}Mn_{1-y-z}O₂ (1),
wherein 0<x<1, 0<y<1, and 0<z<1,
are in electrical contact with each other via one or multiple graphene flakes,
said method including:
a) dispersing HE-NCM particles in a solution of graphene oxide by ultrasonication to give a dispersion;
b) lyophilization of the dispersion to give a graphene oxide/HE-NCM composite;
c) thermal decomposition of the graphene oxide/HE-NCM composite to give the graphene/HE-NCM composite.

2. The method of claim 1, wherein x is from 0.3 to 0.7.

3. The method of claim 1 or 2, wherein y is from 0.2 to 0.8.

4. The method of any one of claims 1 to 3, wherein z is from 0.1 to 0.5.

5. The method of any one of claims 1 to 4, wherein based on the HE-NCM particles, 1 - 20 wt.%, preferably 1 - 10 wt.% of graphene oxide is used.

6. The method of any one of claims 1 to 5, wherein the temperature in the c) thermal decomposition is in a range of 300 - 350°C.

7. The method of any one of claims 1 to 6, wherein the c) thermal decomposition is carried out under an ambient atmosphere.

8. The method of any one of claims 1 to 6, wherein the c) thermal decomposition is carried out under an inert atmosphere, such as N₂ or Ar, or under a reducing atmosphere, such as H₂, or in their combination, such as H₂/Ar.

9. A graphene/HE-NCM composite prepared by the method of any one of claims 1 to 8.

10. The graphene/HE-NCM composite of claim 9, wherein more than one HE-NCM particles are in electrical contact with each other via a common graphene flake.

11. The graphene/HE-NCM composite of claim 9, wherein more than one HE-NCM particles are in electrical contact with each other via multiple graphene flakes.

12. The graphene/HE-NCM composite of any one of claims 9 to 11, wherein one or more HE-NCM particles are partially or completely wrapped by one or multiple graphene flakes.

13. The graphene/HE-NCM composite of claim 12, wherein at least one fourth, preferably at least one third, more preferably at least half of the surface of a HE-NCM particle is wrapped by one or multiple graphene flakes.

14. An electrode material, comprising the graphene/HE-NCM composite of any one of claims 9 to 13 or the graphene/HE-NCM composite prepared by the method of any one of claims 1 to 8.

15. A lithium ion battery, comprising the graphene/HE-NCM composite of any one of claims 9 to 13 or the graphene/HE-NCM composite prepared by the method of any one of claims 1 to 8.

## Patentansprüche

1. Verfahren zur Herstellung eines Graphen/HE-NCM-Verbundstoffs, wobei mehr als ein HE-NCM-Partikel der Formel (I)
xLi₂MnO₃.(1-x)LiNi_{y}Co₂Mn_{1-y-z}O₂ (1),
wobei 0 < x < 1, 0 < y < 1 und 0 < z < 1,
über eine oder mehrere Graphenflocken in elektrischem Kontakt miteinander stehen,
wobei das Verfahren umfasst:
a) Dispergieren von HE-NCM-Partikeln in einer Lösung von Graphenoxid durch Ultraschallbehandlung, um eine Dispersion zu ergeben;
b) Lyophilisierung der Dispersion, um einen Graphenoxid/HE-NCM-Verbundstoff zu ergeben;
c) thermische Zersetzung des Graphenoxid/HE-NCM-Verbundstoffs, um den Graphen/HE-NCM-Verbundstoff zu ergeben.

2. Verfahren gemäß Anspruch 1, wobei x von 0,3 bis 0,7 beträgt.

3. Verfahren gemäß Anspruch 1 oder 2, wobei y von 0,2 bis 0,8 beträgt.

4. Verfahren gemäß einem der Ansprüche 1 bis 3, wobei z von 0,1 bis 0,5 beträgt.

5. Verfahren gemäß einem der Ansprüche 1 bis 4, wobei bezogen auf die HE-NCM-Partikel 1-20 Gew.-%, vorzugsweise 1-10 Gew.-%, Graphenoxid verwendet werden.

6. Verfahren gemäß einem der Ansprüche 1 bis 5, wobei die Temperatur bei der c) thermischen Zersetzung in dem Bereich von 300-350 °C liegt.

7. Verfahren gemäß einem der Ansprüche 1 bis 6, wobei die c) thermische Zersetzung unter einer Umgebungsatmosphäre durchgeführt wird.

8. Verfahren gemäß einem der Ansprüche 1 bis 6, wobei die c) thermische Zersetzung unter einer inerten Atmosphäre, wie z. B. N₂ oder Ar, oder unter einer reduzierenden Atmosphäre, wie z. B. H₂, oder an deren Kombination, wie z. B. H₂/Ar, durchgeführt wird.

9. Graphen/HE-NCM-Verbundstoff, hergestellt durch das Verfahren gemäß einem der Ansprüche 1 bis 8.

10. Graphen/HE-NCM-Verbundstoff gemäß Anspruch 9, wobei mehr als ein HE-NCM-Partikel über eine gemeinsame Graphenflocke in elektrischem Kontakt miteinander stehen.

11. Graphen/HE-NCM-Verbundstoff gemäß Anspruch 9, wobei mehr als ein HE-NCM-Partikel über mehrere Graphenflocken in elektrischem Kontakt miteinander stehen.

12. Graphen/HE-NCM-Verbundstoff gemäß einem der Ansprüche 9 bis 11, wobei ein oder mehrere HE-NCM-Partikel teilweise oder vollständig von einer oder mehreren Graphenflocken umwickelt sind.

13. Graphen/HE-NCM-Verbundstoff gemäß Anspruch 12, wobei wenigstens ein Viertel, vorzugsweise wenigstens ein Drittel, bevorzugter wenigstens die Hälfte der Oberfläche eines HE-NCM-Partikels von einer oder mehreren Graphenflocken umwickelt ist.

14. Elektrodenmaterial, umfassend den Graphen/HE-NCM-Verbundstoff gemäß einem der Ansprüche 9 bis 13 oder den gemäß dem Verfahren gemäß einem der Ansprüche 1 bis 8 hergestellten Graphen/HE-NCM-Verbundstoff.

15. Lithiumionenbatterie, umfassend den Graphen/HE-NCM-Verbundstoff gemäß einem der Ansprüche 9 bis 13 oder den gemäß dem Verfahren gemäß einem der Ansprüche 1 bis 8 hergestellten Graphen/HE-NCM-Verbundstoff.

## Revendications

1. Procédé pour la préparation d'un composite de graphène/nickel-cobalt-manganèse haute énergie (NCM-HE), dans lequel plusieurs particules de NCM-HE de formule (1)
xLi₂MnO₃•(1-x)LiNi_{y}Co_{z}Mn_{1-y-z}O₂ (1),
dans laquelle formule 0 < x < 1, 0 < y < 1 et 0 < z < 1,
sont en contact électrique les unes avec les autres par l'intermédiaire d'une ou plusieurs lamelles de graphène,
ledit procédé comprenant :
a) la dispersion de particules de NCM-HE dans une solution d'oxyde de graphène par sonication aux ultrasons pour donner une dispersion ;
b) la lyophilisation de la dispersion pour donner un composite d'oxyde de graphène/NCM-HE ;
c) la décomposition thermique du composite d'oxyde de graphène/NCM-HE pour donner le composite de graphène/NCM-HE.

2. Procédé selon la revendication 1, dans lequel x va de 0,3 à 0,7.

3. Procédé selon la revendication 1 ou 2, dans lequel y va de 0,2 à 0,8.

4. Procédé selon l'une quelconque des revendications 1 à 3, dans lequel z va de 0, 1 à 0,5.

5. Procédé selon l'une quelconque des revendications 1 à 4, dans lequel par rapport aux particules de NCM-HE, 1-20 % en poids, de préférence 1-10 % en poids d'oxyde de graphène est utilisé.

6. Procédé selon l'une quelconque des revendications 1 à 5, dans lequel la température dans la décomposition thermique c) est dans une plage de 300-350 °C.

7. Procédé selon l'une quelconque des revendications 1 à 6, dans lequel la décomposition thermique c) est effectuée dans une atmosphère ambiante.

8. Procédé selon l'une quelconque des revendications 1 à 6, dans lequel la décomposition thermique c) est effectuée dans une atmosphère inerte, telle que N₂ ou Ar, ou dans une atmosphère réductrice, telle que H₂, ou leur combinaison, telle que H₂/Ar.

9. Composite de graphène/NCM-HE préparé par le procédé selon l'une quelconque des revendications 1 à 8.

10. Composite de graphène/NCM-HE selon la revendication 9, dans lequel plusieurs particules de NCM-HE sont en contact électrique les unes avec les autres par l'intermédiaire d'une lamelle de graphène commune.

11. Composite de graphène/NCM-HE selon la revendication 9, dans lequel plusieurs particules de NCM-HE sont en contact électrique les unes avec les autres par l'intermédiaire de multiples lamelles de graphène.

12. Composite de graphène/NCM-HE selon l'une quelconque des revendications 9 à 11, dans lequel plusieurs particules de NCM-HE sont partiellement ou complètement enveloppées d'une ou plusieurs lamelles de graphène.

13. Composite de graphène/NCM-HE selon la revendication 12, dans lequel au moins un quart, de préférence au moins un tiers, de préférence encore au moins la moitié de la surface d'une particule de NCM-HE est enveloppée d'une ou plusieurs lamelles de graphène.

14. Matériau d'électrode, comprenant le composite de graphène/NCM-HE selon l'une quelconque des revendications 9 à 13 ou le composite de graphène/NCM-HE préparé par le procédé selon l'une quelconque des revendications 1 à 8.

15. Batterie au lithium-ion, comprenant le composite de graphène/NCM-HE selon l'une quelconque des revendications 9 à 13 ou le composite de graphène/NCM-HE préparé par le procédé selon l'une quelconque des revendications 1 à 8.
